# EUROPEAN PATENT SPECIFICATION

(11) **EP 1 264 460 B1**
(45) Date of publication and mention of the grant of the patent: **24.12.2008**
(21) Application number: 01902938.8
(22) Date of filing: 31.01.2001
(51) Int. Cl.: H04L 29/00, H04M 3/42

(54) **PROCEDURE TO FACILITATE COMMUNICATION BETWEEN PARTICIPANTS ACTING IN NETWORKS THAT UTILIZE DIFFERENT ADMINISTRATIVE AND TECHNICAL PRINCIPLES BY DIVIDING THE INFRASTRUCTURE INTO LOGICAL LAYERS**
VERFAHREN ZUR ERLEICHTERTEN KOMMUNIKATION ZWISCHEN TEILNEHMERN, DIE IN VERSCHIEDENE VERWALTUNGSBEZOGENE UND TECHNISCHE PRINZIPIEN VERWENDENDEN NETZEN OPERIEREN, DURCH GLIEDERUNG DER INFRASTRUKTUR IN LOGISCHE EBENEN
PROCEDURE POUR FACILITER LA COMMUNICATION ENTRE PARTICIPANTS DE RESEAUX UTILISANT DES PRINCIPES ADMINISTRATIFS ET TECHNIQUES DIFFERENTS PAR DIVISION DE L'INFRASTRUCTURE EN COUCHES LOGIQUES

(30) Priority: 31.01.2000 SE 0000302
(43) Date of publication of application: 11.12.2002
(73) Proprietor: TELIASONERA AB, 106 63 Stockholm (SE)
(72) Inventor: HAGBARD, Stefan, S-181 61 Lidingö (SE); ERHULT, Margareta, S-135 49 Haninge (SE)
(74) Representative: Hopfgarten, Nils
(86) International application number: PCT/SE2001/000189
(87) International publication number: WO 2001/056242

(56) References cited:
- EP-A1- 0 944 276
- EP-A2- 0 710 042
- WO-A1-98/28899
- WO-A1-99/34618
- US-A- 5 625 681
- US-A- 5 717 749
- US-A- 5 940 490

## Description

### Technical field

The present invention relates generally to communication networks and specifically to a procedure to facilitate communication between different participants in an infrastructure for communication, which participants act in communication networks which at least partially utilize different administrative and technical principles.

### Technical problem

In the telecommunication and data communication networks of today, there are many different technologies for managing of the communication. Further, the deregulation of the telecommunication market has resulted in an ever increasing variety of suppliers in the field. These suppliers are to some extent newly established companies, but are also existing companies with existing infrastructures or service offering which are suitable for implementation of telecommunication and data communication services respectively by means of telecommunication and data communication services. Examples of such existing companies are companies which have at their disposal networks for distribution of electrical power, railway system networks and companies which offer information services. The different kinds of new suppliers within the field have had greatly different starting positions which has resulted in systems with different ways of managing data that are utilized at the realization and management of offered services. This partially applies between systems of different suppliers in which communication is made by means of the same technology, but perhaps above all between systems in which communication is made by means of different technologies.

A supplier of a service will in addition in many cases need to utilize the services of other suppliers at realization and management of the services. A supplier of a mobile telephone service must, for instance, utilize a supplier of an interconnectivity service when a call shall be set up between a customer of the mobile telephone service and a customer of another service, such as a service for fixed telephony. This results in a need of coordination between the different services. Especially the management of the addressing must be coordinated between the services.

The fact that the different systems, which have been built up for realization and carrying of different services, have different ways of managing data, which are utilized at the realization and management of offered services makes it difficult to satisfy the need of coordination of data between different communication networks and services.

The solutions of today of how coordination of data shall be possible between different systems for realization and carrying of different communication services are to a large extent based on that specific interfaces are introduced between each of the systems between which coordination is needed. A big problem with this type of solutions is that a large number of specific interfaces are needed, which results in poor flexibility and is expensive and complex. For instance there will be problems at introduction of new services or at utilization in a system of service in another system where no interface for coordination of data has been introduced. Further, this kind of solutions results in that a customer who wants to utilize different services which have been realized in different systems just as previous must have an address for each service supplier, and that addresses cannot be retained if the customer selects to change service supplier.

Further, also centralized suggestions for solution have been presented, in which central databases manage coordination of data between different communication networks. These solutions, however, have been strongly aimed at the technical coordination of different communication networks, which utilize different communication technologies, such as mobile telephone networks, IP-networks and ATM-networks etc. Consequently, for instance, the addressing in theses suggestions for solutions are still strongly connected to the technical realization. Addresses in a network are linked via a subscriber in this network to an address in another network. A user consequently must have different addresses if he/she shall be subscriber in different networks and also has to change address if he/she shall change operator. Further a service which utilizes the services of different suppliers has to be coordinated with the services of all these suppliers if they are using different administrative and technical principles, for instance for addressing.

WO 9828899 discloses systems and methods for managing call processing information, and in particular for facilitating local number portability when requested by an individual or business. Specifically a method is described for providing local number portability services, when changing operator, to a telecommunications system arranged in a Telecommunications Management Network (TMN) framework. The TMN architecture provides a functional hierarchy of logical layered levels, which break down the telecommunications system into operation layers.

### Summary of the invention

The aim of the present invention is to solve the problem that the addressing for a participant at utilization of a service is strongly connected to underlying services, which results in that the addressing must be updated if the addressing is changed in the underlying service. Communication is then facilitated between participants in an infrastructure for communication, which participants act in communication networks which at least partially utilize different administrative and technical principles.

The aim above is achieved by a procedure according to the claim 1 where the infrastructure for communication is divided into a number of logical layers. A number of participants are defined in each of the logical layers and the participants in respective logical layer are linked to one or more logical addresses in the logical layer. Further, the logical addresses in a logical layer are linked to one or more logical addresses in an adjacent logical layers.

By participants are meant physical and logical objects which can act in the communication networks. These participants consequently can be technical equipment or physical/legal persons such as customers/users, service suppliers, networks, support systems etc., but also logical objects such as software in computers etc. Communication networks and communication shall be interpreted in a wide sense and include all types of connections respective information exchange between participants, i.e. connections respective between exchange of information in a service and within systems for technical and administrative management. Logical addresses shall be interpreted in a wide sense and include everything from physical addresses, such as a permanent home address or address to a port in a computer, to more abstract addresses, such as a logical pointer to one at present used physical address.

By the participants being linked to logical addresses in the same logical layer, which logical addresses then are linked to logical addresses in adjacent logical layers, the logical addresses in a logical layer need not be updated if the addressing is changed in another logical layer. The only thing that has to be done is that the linking is changed to the new logical address in the logical layer where the addressing has been changed. For instance can a user of a mobile telephone service in a service layer retain his/her logical address in the service layer even if he/she changes operator, because the logical address in the service layer is linked to a logical address in an interconnectivity layer which points out a logical address to the network to which the user is connected. At change of operator consequently only the pointer is changed from the logical address in the interconnectivity layer to pointing at a logical address in the network of the new operator.

The invention is based on the knowledge that it is not sufficient that the addressing between the networks are coordinated, either this is made locally between each of the systems, or centrally in an overall system, to eliminate the problem. Instead the addressing must be released from the specific technical solution and also from the specific technical solution which respective service supplier utilizes in the infrastructure for communication.

The invention has a number of advantages in comparison with known technology in addition to the above discussed. Above all the object-oriented view on participants and logical addresses in a layer-structured architecture provides possibilities for a more consistent and thus more secure and efficient management of participant data and the logical addresses to which these are linked. For instance the architecture makes general methods for access and management of participant data and logical addresses of both technical and administrative systems possible. By the logical addresses being defined by layers, the addressing in the service layer can be released from the physical realization and therefore be made more user-friendly. Further, rules for access of information, services, etc, can in a simpler way be defined between participants.

### Brief description of the drawings

The invention will be described in detail in the following with reference to the enclosed drawings, in which
Figure 1 schematically shows a division of an infrastructure for communication in a number of logical layers,
Figure 2 schematically shows a system in which an embodiment of the invention is realized, and
Figure 3 shows a flow chart for a procedure according to the invention.

### Description of preferred embodiments

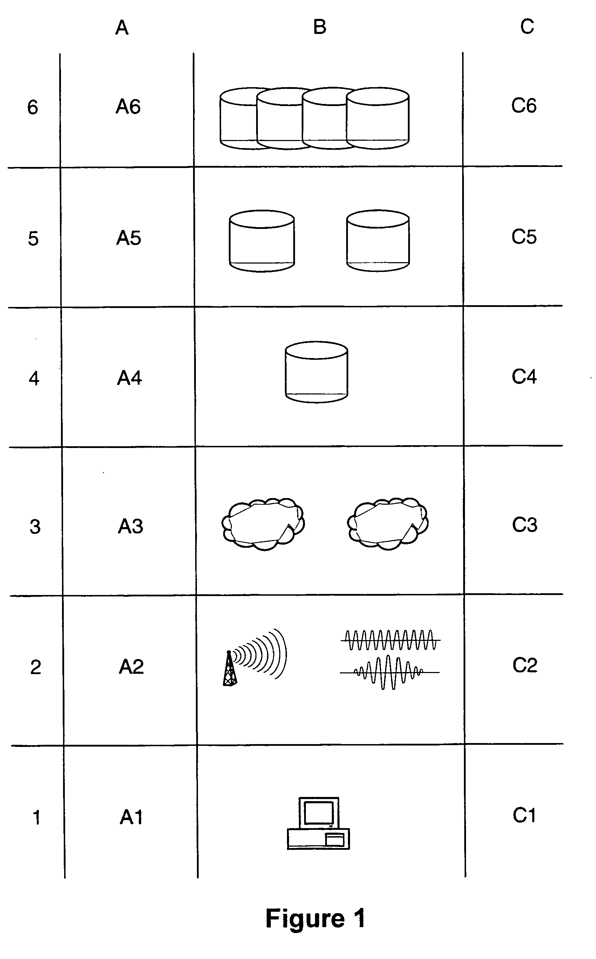

In Figure 1 is shown a division of an infrastructure for communication in a number of logical layers 1-6. The division is in this example made in six layers 1-6 for three different groups/branches A-C which include business architecture A, technical architecture B, and information architecture C. Another division into layers and other types of groups/branches can of course be made. At the bottom there is a terminal layer 1, with the physical terminals, such as mobile telephones, exchanges, service servers etc. After this there is a transmission layer 2 with equipment for transmission, such as optical fibers, radio links etc. The layer above the transmission layer 2 is the network layer 3, in which there are the different networks, such as IP-networks, GSM-networks, PSTN-networks etc. Above this layer there is an interconnectivity layer 4 in which there are functions for interconnection of different networks. The interconnection can be made between networks that utilize the same technology, and networks which utilize different technologies. After this layer, there is a service layer 5 in which different types of services are realized, which utilize the underlying layers. The services can be information services and communication services etc, such as web-services and telephony. At the top of this division there is a context layer 6, in which there are tailor-made services, for instance customer specific applications and profiles. According to the invention this logical division of layers then is utilized at storing, management and exchange of information between different systems and services in and between layers by a number of participants and logical addresses which are connected to these being defined in the different logical layers. Examples of participants are customers/users, operators, service suppliers, information suppliers etc and examples of logical addresses which are connected to these is an address to a customer of a supplier of a telephone service. The logical addresses are then linked to logical addresses in adjacent layers. For instance is a customer's logical address for a telephone address in the service layer linked to a logical address in the interconnectivity layer. A more detailed description is given in the following.

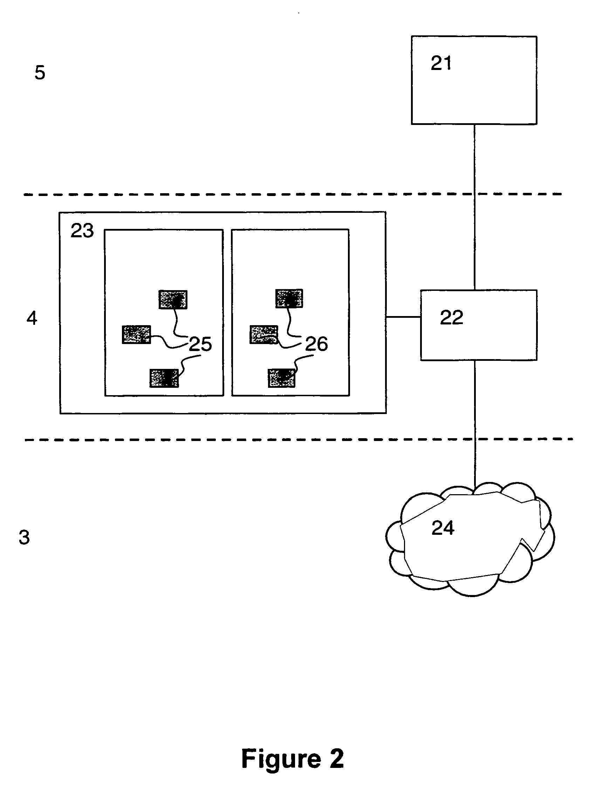

Figure 2 shows schematically a system in which an embodiment of the invention is realized. A service server 21 in a service layer 5 is connected to an interconnectivity server 22 in an interconnectivity layer 4. The interconnectivity server 22 is in its turn connected to database unit 23 and a network 24 in a network layer 3. In the database unit 23 there are logical addresses 25, participants 26, and links between these stored, such as links between participants 26 and logical addresses 26, and between logical addresses 26 which relates to different logical layers. For instance has the service server 21 a logical address in the service layer 5. This logical address is linked to a logical address in the interconnectivity layer 4, which logical address in its turn is linked to a logical address in the network layer 3. Further, the logical address of the service server 21 in the service layer 5 is linked to a participant, which in this case is the service supplier that provides the service. In the database 23 there are also links between the participant that supplies the service and other participants, such as users of the service. For these linking/links there is a level of authorization defined which i.a. controls to which information the different participants are authorized at each other.

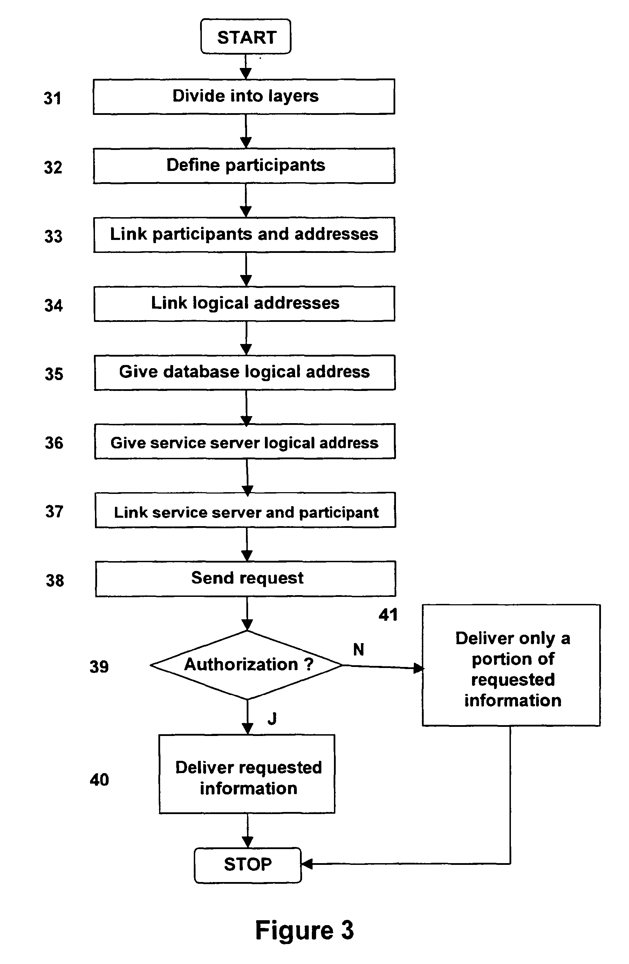

In Figure 3 is shown a flow chart for a procedure according to the invention. In a step 31, the infrastructure for communication is divided into logical layers according to Figure 1. In the steps 32-37 a number of different objects are defined which are linked to each other and are stored in a database according to Figure 2. In a step 32 a number of participants, such as a customer and a service supplier, are defined. Each of the participants in the logical layers are then linked in a step 33 to one or more logical addresses in the same logical layer. For instance is the customer and the service supplier linked to a set of logical addresses each. Then are, in a step 34, the logical addresses for each of the participants linked to one or more logical addresses in adjacent logical layers. Further, the database and the service server are allocated a logical address each, in a step 35, respective in a step 36 in the layers to which these belong. In addition is, according to Figure 2, in a step 37 a service server linked to the service suppliers.

In a step 38 is then from the service server a request for information about a logical address transmitted which is linked to the customer to the database. In a step 39 is decided which level of authorization the service supplier, who is linked to the service server, has with regard to the customer. If the service supplier is authorized to all the information that is requested, this information is delivered in a step 40 to the service server, otherwise is in a step 41 delivered only the portion of the requested information to which the service server is authorized.

## Claims

1. Procedure to facilitate communication between different participants in an infrastructure for communication, which participants act in communication networks which at least partially utilize different administrative and technical principles, including the steps
to divide the infrastructure for communication into a number of logical layers,
to define a number of participants in each of the logical layers, **characterized by** the steps
to link the participants in respective logical layer to one or more logical addresses in the logical layer,
to link the logical addresses in a logical layer to one or more logical addresses in adjacent logical layers,
to store, for each of the logical layers, the participants, the logical addresses and the linking/links between these in a separate logical unit,
to allocate the respective separate logical unit a logical address in the logical layer to which it belongs,
to transmit, from unit in a communication network, a request for information regarding logical addresses to a separate logical unit,
to compile/put together, on basis of the linking/links between logical addresses, the requested information,
to transmit, from said separate logical unit, the requested information to said unit in said communication network,
to allocate a unit in a communication network a logical address in the logical layer to which it belongs,
to link said unit in said communication network to a participant,
to transmit/send from said unit in said communication, network, a logical address for said unit to said separate logical unit, and
to decide a level of authorization for the participant to which the logical address of said unit is linked,
wherein only that portion of the requested information is transmitted from said separate, logical unit to said unit in said communication network to which said unit in said communication network is authorized.

2. Procedure as claimed in claim 1, wherein said request is transmitted via a general protocol for exchange of information.

3. Procedure as claimed in claims 1 or 2, wherein the logical layers include at least two of the
following layers, a terminal layer (1),
a transmission layer (3),
a network layer (3),
an interconnectivity layer (4),
a service layer (5), and
a context layer (6).

4. Procedure as claimed in claim 3, **characterized in that** said separate logical unit is a database unit (23) located in said interconnectivity layer (4) and **in that** said unit in said communication network is a service server (21) located in said service layer (5).

## Patentansprüche

1. Verfahren zum Erleichtern von Kommunikation zwischen unterschiedlichen Teilnehmern in einer Infrastruktur für Kommunikation, welche Teilnehmer in Kommunikationsnetzen handeln, die wenigstens teilweise unterschiedliche Verwaltungsprinzipien und technische Prinzipien verwenden, das die Schritte einschließt,
die Infrastruktur für die Kommunikation in eine Anzahl von logischen Schichten aufzuteilen,
eine Unzahl von Teilnehmern in jeder der logischen Schichten zu definieren, **gekennzeichnet durch** die Schritte
die Teilnehmer in entsprechender logischer Schicht mit einer oder mehreren logischen Adressen in der logischen Schicht zu verknüpfen,
die logischen Adressen in einer logischen Schicht mit einer oder mehreren logischen Adressen in benachbarten logischen Schichten zu verknüpfen,
für jede der logischen Schichten die Teilnehmer, die logischen Adressen und die Verknüpfungsvorgänge/Verknüpfungen zwischen diesen in einer getrennten logischen Einheit zu speichern
der entsprechenden getrennten logischen Einheit eine logische Adresse in der logischen Schicht, zu der sie gehört, zuzuteilen,
von einer Einheit in einem eine Anforderung für Information, die logische Adressen betrifft, zu einer getrennten logischen Einheit zu übertragen,
aufgrund der Verknüpfungsvorgänge/Verknüpfungen zwischen logischen Adressen die die angefordert Information zu kompilieren/zusammenzufügen,
von der getrennten logischen Einheit die angeforderte Information zu der Einheit in dem Kommunikationsnetz zu übertragen,
einer Einheit in einem Kommunikationsnetz eine logische Adresse in der logischen Schicht, zu der sie gehört, zuzuteilen,
die Einheit in dem Kommunikationsnetz mit einem Teilnehmer zu verknüpfen,
von der Einheit in dem Kommunikationsnetz eine logische Adresse für die Einheit zu der getrennten logischen Einheit zu übertragen/senden, und
einen Pegel der Berechtigung für den Teilnehmer zu bestimmen, mit dem die logische Adresse der Einheit verknüpft ist,
wobei nur der Teil der angeforderten Information von der getrennten logischen Einheit zu der Einheit in dem Kommunikationsnetz übertragen wird, für das die Einheit in dem Kommunikationsnetz berechtigt ist,

2. Verfahren nach Anspruch 1, bei dem die Anforderung über ein allgemeines Protokoll für Austausch von Information übertragen wird,

3. Verfahren nach Anspruch 1 oder 2, bei dem die logischen Schichten wenigstens zwei der folgenden Schichten einschließen,
eine Endgeräteschicht (1),
eine Übertragungsschicht (2),
eine Netzschicht (3),
eine Schicht (4) 3 für wechselseitige Verbindung,
eine Dienstschicht (5), und
eine Kontextschicht (6).

4. Verfahren nach Anspruch 3, **dadurch gekennzeichnet, dass** die getrennte logische Einheit eine Datenbankeinheit (23) ist, die in der Schicht (4) für wechselseitige Verbindung angeordnet ist, und dass die Einheit ihn dem Kommunikationsnetz ein Dienstserver (21) ist, der in der Dienstschicht (5) angeordnet ist.

## Revendications

1. Procédure pour faciliter la communication entre différents participants dans une infrastructure de communication, ces participants agissant dans des réseaux de communication qui utilisent au moins partiellement des principes administratifs et techniques différents, comprenant les étapes de :
division de infrastructure de communication en un certain nombre de couches logiques,
définition d'un nombre de participants dans chacune des couches logiques,
**caractérisée par** les étapes de
liaison des participants dans une couche logique respective à une ou plusieurs adresses logiques dans la couche logique,
liaison des adresses logiques dans une couche logique à une ou plusieurs adresses logiques dans des couches logiques adjacentes,
mémorisation, pour chacune des couches logiques, des participants, des adresses logiques et des liaisons / liens entre ceux-ci dans une unité logique séparée,
affectation, à l'unité logique séparée respective, d'une adresse logique dans la couche logique à laquelle elle apparient,
transmission, à partir d'une unité dans un réseau de communication, d'une demande d'informations concernant des adresses logiques à une unité logique séparée,
compilation / groupage, sur la base des liaisons 1 liens entre adresses logiques, des informations demandées,
transmission, à partir de la dite unité logique séparée, des informations demandées à la dite unité dans le dit réseau de communication,
affectation, à une unité dans un réseau de communication, d'une adresse logique dans la couche logique à laquelle elle appartient,
liaison de la dite unité dans le dit réseau de communication à un participant,
transmission 1 envoi, à partir de la dite unité dans le dit réseau de communication, d'une adresse logique pour la dite unité à la dite unité logique séparée, et
décision d'un niveau d'autorisation pour le participant auquel l'adresse logique de la dite unité est liée,
dans laquelle seule cette portion des informations demandées, à laquelle la dite unité dans le dit réseau de communication est autorisée, est transmise de la dite unité logique séparée à la dite unité dans je dit réseau de communication.

2. Procédure selon la revendication 1, dans laquelle la dite demande est transmise via un protocole général pour échange d'informations.

3. Procédure selon la revendication 1 ou 2, dans laquelle les couches logiques comprennent au moins deux des couches suivante :
une couche terminale (1),
une couche de transmission (2),
une couche de réseau (3),
une couche d'interconnectivité (4),
une couche de service (5), et
une couche de contexte (6).

4. Procédure selon la revendication 3, **caractérisée en ce que** la dite unité logique séparée est une unité de base de données (23) située dans la dite couche d'interconnectivité (4), et **en ce que** la dite unité dans le dit réseau de communication est un serveur de service (21) situé dans la dite couche de service (5).
